# EUROPEAN PATENT SPECIFICATION

(11) **EP 1 554 028 B1**
(45) Date of publication and mention of the grant of the patent: **01.03.2006**
(21) Application number: 03759444.7
(22) Date of filing: 24.09.2003
(51) Int. Cl.: B01D 29/21

(54) **FILTERELEMENT INCLUDING FILTRATION MEDIA WITH MULTI-LAYER PLEAT SUPPORT**
EIN FILTERMEDIUM MIT MEHRSCHICHTIGER FALTENABSTÜTZUNG ENTHALTENDEM FILTERELEMENT
ELEMENT DE FILTRE COMPRENANT UN MILIEU DE FILTRATION ET UN SUPPORT PLISSE A COUCHES MULTIPLES

(30) Priority: 26.09.2002 US 413990 P
(43) Date of publication of application: 20.07.2005
(73) Proprietor: Cuno Incorporated, Meriden, CT 06450-1018 (US)
(72) Inventor: LUCAS, Jeffrey, A., Clinton, CT 06413 (US); PAUL, C., Thomas, Madison, CT 06443 (US); MORBY, John, Farmington, CT 06320 (US)
(74) Representative: Charig, Raymond Julian
(86) International application number: PCT/US2003/029987
(87) International publication number: WO 2004/028660

(56) References cited:
- EP-A- 0 048 310
- EP-A- 0 470 485
- US-A- 3 871 851
- US-A- 4 012 211
- US-A- 4 033 881
- US-A- 4 488 966
- US-A- 5 374 354
- US-A1- 2002 060 183
- US-B1- 6 267 252

## Description

### BACKGROUND OF THE DISCLOSURE

### 1. Technical Field

The present disclosure relates to fluid filtration devices and, more particularly, to pleated filters having at least two downstream support layers, thereby enhancing filtration performance and improving flow/throughput.

### 2. Background of the Related Art

Filtration is the process of separating particles, or contaminants from a fluid (liquid or gas), and can be accomplished by passing the fluid through a porous filter medium that stops or captures the particles while permitting the fluid to pass there through. Such fluid filtering is used extensively in the manufacture of polymer products, medicinal products, mineral and metallurgical processing, petroleum refining water purification, emissions control, and in beverage and food preparation.

Over the years, the design of cylindrical pleated filter cartridges has involved efforts to maximize the amount of filter media or the available surface area that may be fit into a filter cartridge having a given outer diameter without adversely effecting flow or filter life. Pleated filter elements have flow rate and throughput limitations associated with the maximum amount of filter media that can be packaged into a pre-defined filter envelope. Improvements in filter performance can be difficult due to large pre-established fairly standardized customer bases which utilize a common filter housing of design dimensions, and configuration within which the filter elements are enclosed accepting only one or more filter elements of a specific size. A major challenge of filter designers is to increase the filtering capacity of a filter element, i.e., the usable surface area without altering its external dimensions so that the filter element can be employed with existing filter housings.

One method for improving filter flow and throughput performance of pleated filter elements is to increase the amount of filtration media present in the filter. This can be accomplished by reducing the thickness of both the filtration media and the pleat support and drainage medium or materials. However, reducing the thickness of the filtration media potentially compromises retention properties of the filtration device, i.e., removal of particulates by sieving or trapping within the filtration media. Furthermore, the use of increasingly thinner supports can have a negative effect on flow and throughput performance by not providing sufficient flow paths.

Design efforts directed to optimizing filtration performance have yielded various pleat designs and pleat configurations aimed at increasing filtration area, e.g., through modified pleat geometries such as "spiral" or "multi-pleat" constructions. However, the use of spiral and multi-pleat designs typically requires utilization of a smaller core to realize the desired benefits. While a smaller core is not always a serious limitation for liquid applications, it is a serious limitation for gas applications where flow losses through a smaller core can be significant.

With reference to prior art pleat designs, in a standard radially pleated filter cartridge, such as that disclosed in U.S. Patent No. 3,692,184 to Miller, Jr. et al., the amount of filter media that may be packed into the cartridge is limited by the number of pleats that can be packed about the cartridge core. Consequently, there is a substantial amount of empty space between adj acent pleats at the outer periphery of the filter element. Accordingly, in a typical cylindrical pleated filter cartridge, there is a great deal of unused space between adj acent pleats as the distance from the center of the core increases. Further, the pleats are highly compressed at the inner periphery which can impede flow due to support compression.

A cylindrical filter element having a radially extending W-pleat configuration, such as that disclosed in U.S. Patent No. 3,799,354 to Buckman et al., represents an alternative to a standard radially pleated filter element. The radial W-pleat configuration minimizes pleat spacing and provides added surface area about the outer periphery of the filter element by providing relatively short pleats that extend radially inward from the outer periphery of the filter between every two pleats of standard height. The short pleats are the same height and arise at a uniform frequency about the circumference of the filter, i.e., there is one short pleat between every two full length pleats. These shorter pleats occupy the open space near the outer periphery of the filter element, but do not maximize the amount of filter media that can be disposed within the cartridge, as some empty space still remains between the pleats. One problem associated with the W-pleat construction is a less than optimum pleat density. The radial W-pleat construction also suffers from the effect of pleat migration, in that the shortened pleats tend to move radially inward towards the central axis of the filter. This migration is undesirable as it can cause binding, blockages, increased pressure drops across the filter, reduced filter life and potential to the filter media.

U.S. Patent No. 4,033,881 to Pall discloses filter cartridges comprising a plurality of layer paper sheet filter sheets of different pore sizes that includes foraminous relatively rigid support and drainage members having greater rigidity than the paper filter media. According to the Pall '881 patent, "suitable foraminous external and internal supports can be made of metal or plastic, and can be, for example, in the form of perforated sheets or plates, or woven or nonwoven or extruded netting, made of plastic filaments or extrusions." [Col. 3, lines 63-67.] As further described in the Pall '881 patent, the extruded plastic netting can be provided in a variety of patterns, including an open weave pattern with extruded links of equal diameter in both directions, or with extruded links wider in one direction than in another, forming ribs extending lengthwise, or crosswise, or circumferentially, of the netting. [See generally, U.S. Patent No. 4,033,881, cols. 3 and 4.]

A spiral pleat filter element is comparable to a standard pleated filter in that it includes a plurality of longitudinal pleats disposed in a cylindrical configuration. In a spiral pleat filter, however, the ends of the pleats are rolled over to minimize the spacing between adjacent pleat surfaces near an outer diameter of the filter element, such that more filter surface area can be provided in a filter of equal diameter.

A conventional spiral pleated filter element is disclosed in U.S. Patent No. 5,543,047 to Stoyell et al. The spiral pleated filter element of the Stoyell '047 patent comprises a three layer composite of a filter medium, an upstream drainage layer disposed upstream relative to the filter medium, and a downstream drainage layer disposed downstream relative to the filter medium. The drainage layers disclosed in the Stoyell '047 patent "can be in the form of a mesh or screen or a porous woven or non-woven sheet." [Col. 5, lines 52-53.] The Stoyell '047 patent discloses a drainage layer that takes the form of an extruded polymeric mesh oriented and configured so that opposing surfaces of adjacent pleats are in intimate contact with one another over a substantial portion of the length of the filter element.

Additional patents directed to spiral pleat filter devices include U.S. Patent No. 2,395,449 to Briggs, and U.S. Patent No. 6,113,784 to Stoyell et al.

A further W-pleat design is disclosed in U.S. Patent No. 6,315,130 to Olsen.

While both the spiral pleat and the W-pleat designs provide surface-type filters with increased filter surface area, the spiral pleat designs do not have the pleat migration problems associated with the W-pleat designs. As compared with a W-pleat filter, however, the rolled-over pleats of a spiral pleated filter provide fewer and more difficult to access radial flow paths near the outer diameter of the filter, leading to a greater pressure drop across the filter. In addition, the rolled-over pleats of a spiral pleated filter provide longer flow paths and, therefore, a greater chance of the flow paths becoming blocked in high load or large particle contaminant applications.

Despite efforts to date, there is a continuing need for filter designs that offer increased filter area surface, improved flow/throughput for a given filter cartridge size and design and which are conducive to being inserted in an elongated cylindrical cartridge and prevent pleat migration.

EP 0470485 discloses a pleated filter element having longitudinally extending pleats and a wrap member wrapped around the filter member. The pleated filter element may comprise a composite having first and second extruded polymeric mesh layers and a filter layer positioned between them. The mesh can be fabricated from any polymeric material, including polyester, polypropylene or polyamide. EP '485 teaches that extruded polymeric mesh is generally preferable to other support and drainage material, including woven and nonwoven fibrous webs and polymeric netting. Polymeric beads may be applied along the downstream surface of the downstream support and drainage layer. EP '485 also teaches a method of applying continuous parallel beads by the application of a hot melt adhesive from an unevenly spaced multi-orifice dispensing head.

### SUMMARY OF THE DISCLOSURE

According to one aspect, the present invention provides for a filter element as in claim 1.

According to another aspect, the present invention provides for a filter cartridge as in claim 12.

According to the present disclosure, advantageous filter elements may be provided that offer superior filtration performance including improved flow for a given filter cartridge size/design, the latter being achieved through the selection of support materials that act cooperatively to improve total flow.

A filter element constructed according to the present disclosure includes a filtration media, an upstream pleat support positioned upstream and in contact with the filtration media, multi-layer downstream pleat supports positioned downstream from the filtration media, including a first downstream support layer and a second downstream support layer:
(a) The first downstream support layer is in contact with the filtration media and is interposed between the filtration media and the second downstream layer, with the first downstream support layer having been fabricated so as to minimize points of surface contact with the filtration media.
(b) The second downstream support layer is in contact with the first downstream support layer and is fabricated so as to facilitate lateral fluid flow relative to the multi-layer downstream pleat support.

More particularly, the multi-layer downstream pleat support includes a first downstream support layer and a second downstream support layer. The first downstream support layer is interposed between the filtration media and the second downstream support layer and is fabricated so as to minimize points of surface contact with the filtration media, thereby enhancing fluid flow away from the filtration media, The first downstream support is fabricated from a material that contacts the membrane in as few locations as possible so as to allow the fluid, whether it be liquid or gas, to egress from the filtration media and into the second downstream support layer located just below. Suitable materials for use in fabricating the first downstream support layer are non-woven materials characterized by high air permeability, low thickness, high strength, low fiber diameter and/or a relatively soft feel to prevent abrasion of the filtration media. Preferred examples of materials for fabricating the first downstream support layers are polypropylene or polyesters. In an alternative embodiment, the first downstream support layer can be fabricated of a nonwoven material that is laminated to the filtration media. However, it is generally preferred to provide the first downstream support layer in non-laminated juxtaposition relative to the filtration media, thereby improving flow through the first support layer and the filtration media, e.g., by as much as 3 to 5%.

According to the present disclosure, the second downstream support layer is in contact with the first downstream support layer and is fabricated so as to facilitate lateral fluid flow. Preferably, the second downstream support layer is fabricated from an extruded apertured film material, and preferably an apertured film material having rib(s) formed on one side. The rib(s) advantageously maintain a gap when the pleated filtration media is folded onto itself, thereby greatly improving lateral fluid flow.

The inventors herein have established (infra) that eliminating either the first or the second downstream support layer will degrade the performance of the filter. The first downstream support layer, which is typically fabricated from a nonwoven material, does not provide optimum lateral flow. Likewise, the extruded apertured film would disadvantageously effect a sealed contact against the filtration media if placed directly against it, thereby limiting fluid egress from the filtration media to aperture locations. The addition of the support layers to the filter design allows an increase in the media area without resorting to different pleat designs, larger geometries or ever thinner supports, despite the fact that the additional support layers effectively add thickness. The relatively thin filtration media is capable of increased packing by pressing the pleats together more closely, but in prior art systems, the increased area associated with tight packing does not result in increased flow because the support materials are closely pinched together. It has now been found that when multiple downstream support layers are employed, as described in the present disclosure, the higher filtration area will beneficially lead directly to improved flow because the transport of the fluid from the downstream layers to the core will not be impeded. However, even when the filler element is constructed with less filtration area, the construction in accordance with the invention provides improved flow rate and improved flux, i.e., flow per area.

The filtration media may take a variety of forms, as are known in the art. Pleated filtration media having a plurality of longitudinally extending pleats may be advantageously incorporated into filter elements according to the present disclosure. The specific pleat geometry is not critical to the superior performance achievable according to the present disclosure. Radial pleats, W-pleats and spiral pleats are exemplary pleat geometries contemplated for use herein.

The disclosed filter elements may be utilized in filter cartridges, preferably cylindrical cartridges although the filter elements may be used to equal advantage with non-cylindrical filtration devices (planar filtration devices) and non-radial pleat constructions (spiral pleats), to provide enhanced filtration performance, e.g., by way of increased media area and improved flow. An exemplary filter cartridge according to the present disclosure includes a filter element having a longitudinal axis, an outer periphery and an inner periphery. The filter element typically includes a filtration media, an upstream pleat support positioned upstream from and in contact with said filtration media, and a multi-layer downstream pleat support positioned downstream from said filtration media, as disclosed herein. Exemplary filter cartridges according to the present disclosure also typically include a perforated, preferably cylindrical, cage surrounding the outer periphery of the filter element, a perforated, preferably cylindrical, core surrounded by the inner periphery of the filter element coaxially positional between the core and the cage. The cartridge assembly is coaxially positioned within the cage. It is necessary to seal the ends of the pleated element to prevent flow from bypassing around the edges. As is well known in the art, this is accomplished through the use of end caps. The end cap must be made of a material which first achieves a flow state so it can envelope the edge of the pleat structure and then harden to make a permanent seal. One typical means of accomplishing this sealing action is through use of a thermomelt material such as polypropylene, polyethylene or polyester, which reaches the melt state through heating and hardens with cooling. An alternate method would be to use a thermoset, such as epoxy, or a thermoplastic, such as santoprene, which are in a liquid state initially but harden upon cure. The term "hard" as used herein is relative as santoprene is an elastomeric material. It is highly preferred that the end caps also embed the cage and core to provide the filter with added rigidity and strength.

In accordance with an embodiment of the invention, in a separate step, the end caps are bonded with an adapter element that permits the filter to fit into different housings. However, it is also well known to combine end cap and adapter function into one part.

In accordance with an embodiment of the invention, in a separate step the end caps are combined with an adapter element to form a single part that allows the filter element to more easily be fitted into the filter housing.

The non-cylindrical filtration devices and the non-radial constructions likewise benefit from the multi-layer supports of the invention in both up and downstream positions due to the greater pleat compression of the upstream or outer periphery pleats. Included without limitation are those filter elements as the spiral pleated filter elements having a plurality of longitudinally extending pleats which are designed so that adjacent pleats are laid-over upon one another to form the spiral pleats and multi-layer paper sheet filter cartridges in which a plurality of paper filter sheets of differing pore sizes are arranged in sequence of fluid flow therethrough according to decreasing pore size and which are formed in a concentric corrugated tubular configuration for fluid flow therethrough from one side to the other side as these would likewise benefit from multi-layer supports in both the up and downstream positions due to the greater compression of the upstream or outer periphery pleats in the spiral design and the relative weakness and therewith inability to withstand high differential fluid pressures without rupture in the multi-layer sheet design.

These and other aspects of the present disclosure will become more readily apparent to those having ordinary skill in the art from the following detailed description of exemplary embodiments taken in conjunction with the drawings described hereinbelow.

### BRIEF DESCRIPTION OF THE DRAWINGS

So that those having ordinary skill in the art to which the present disclosure relates will more readily understand how to make and use the disclosed filter elements, exemplary embodiments thereof will be described in detail hereinbelow with reference to the drawings, wherein:
Fig. 1 is a perspective view, partially cutaway, of a cartridge assembly including a pleated filter element constructed in accordance with an exemplary embodiment of the present disclosure contained between an inner core and an outer cage of the cartridge assembly wherein a portion of the filter element is shown unwrapped from within the cage.
Fig. 2 is a perspective, partially exploded, view of a portion of an exemplary filter element, illustrating the multi-layer structure thereof; and
Fig. 3 is a schematic cross-sectional illustration showing fluid flow relative to an exemplary filter element according to the present disclosure.

### DETAILED DESCRIPTION OF PREFFERED EMBODIMENT(S)

According to the present invention, advantageous filter elements are provided that offer superior filtration performance by providing a selection of support layers that act cooperatively to greatly enhance flow. Exemplary filter elements according to the present disclosure include a filtration media, an upstream pleat support and a multi-layer downstream pleat support. The filtration media may take a variety of forms, as are known and conventional in the art. Pleated filtration media having a plurality of longitudinally extending pleats may be advantageously incorporated into filter elements according to the present invention. The specific pleat geometry is not critical to the superior performance achievable according to the present disclosure. Radial pleats, W-pleats and spiral pleats are exemplary pleat geometries contemplated for use herein.

The filtration media is typically fabricated from a microporous filtration membrane having a pore size of about 0.1 microns to about 10 microns. The pore size is typically characterized by a bubble point method, as is known in the art. The filtration medium can be fabricated from conventional filtration materials, such as expanded Teflon, nylon, polyether sulfone, polyvinylidene difluoride and the like.

Selection of an upstream pleat support according to the present disclosure is not critical to filtration performance and its selection generally depends upon a number of factors, e.g., requirements associated with the upstream support's ability to maintain flow under dirt loading, the required chemical resistance of the upstream support, and/or issues associated with potential damage to the filtration media caused by the upstream support.

The multi-layer downstream pleat support includes a first downstream support layer and a second downstream support layer. The first downstream support layer is interposed between the filtration media and the second downstream support layer. In an exemplary embodiment of the present disclosure, the first downstream support layer is fabricated using a material made by the conventional spunbond, spunlace, airlaid or wetlaid techniques. The first downstream support layer is fabricated so as to minimize points of surface contact with the filtration media, thereby enhancing fluid flow away from the filtration media. More particularly, the first downstream support is fabricated from a material that contacts the membrane in as few locations as possible so as to allow the fluid, whether it be liquid or gas, to egress from the filtration media and into the second downstream support layer arranged just below.

Preferred first downstream support layers are fabricated from materials such as polyamide, polypropylene or polyester, e.g., poly(ethylene terephthalate) (PET), poly(butylene terephthalate (PBT), PTT or polyaramide. A preferred material for use in fabricating the first downstream support layer is BBA Nonwoven Typar 3091L, although other nonwoven materials that minimize points of surface contact with the filtration media are also suitable for use according to the present invention.

The nonwoven material may be made using thermal binding techniques or chemical binders. Suitable materials for use in fabricating the first downstream support layer are characterized by high air permeability, low thickness, high strength, low fiber diameter and/or a relatively soft feel to prevent abrasion of the filtration media. In some applications, it may be desirable to impart chemical or oxidation resistance to the first downstream support layer, as will be apparent to persons skilled in the art based on the intended filtration application(s).

In an alternative embodiment of the present invention, the first downstream support layer is a nonwoven material that is laminated to the filtration media. Lamination may be effected according to conventional lamination techniques, as are well known in the art. However, as noted above, it is generally preferred to provide the first downstream support layer in non-laminated juxtaposition relative to the filtration media, thereby improving flow through the first support layer and the filtration media, e.g., by as much as 3 to 5%.

According to the present invention, the second downstream support layer is in contact with the first downstream support layer and is fabricated so as to facilitate lateral fluid flow. In accordance with a preferred embodiment, the second downstream support layer is fabricated from an extruded apertured film material, and preferably an apertured film material having rib(s) formed on one side. The rib(s) advantageously maintain a gap when the pleated filtration media is folded onto itself, thereby greatly improving lateral fluid flow. A preferred material for use in fabricating the second downstream support layer is Delstar Delnet RC-0707-24P.

In accordance with the present invention, it has been found that eliminating either the first or the second downstream support layer degrades the performance of the filter. As noted above, the first support layer, which is typically fabricated from a nonwoven material, does not provide optimum lateral flow, whereas the extruded apertured film would disadvantageously effect an undesirable sealed contact against the filtration media if placed directly against it, thereby limiting fluid egress from the filtration media to aperture locations.

In order to establish that utilizing both a first and second support layer in the filter design results in improved air flow performance, the inventors constructed nine cartridges, groups of three of which correspond to one of the following three groups:
- Group 1: (according to the invention) including both a first downstream support layer and a second downstream support layer.
- Group 2: the first downstream support layer is eliminated (nonwoven material).
- Group 3: the second downstream support layer is eliminated (extruded apertured film).

All of the pleat packs were cut to a constant 5.75" in length as opposed to keeping the number of pleats constant per pleat pack. This served to maintain a constant pleat compression within the pack and eliminated a pleat separation condition which can lead to end cap failures.

Airflow and Water Flow Rate Testing was carried out using conventional procedures on the three cartridges constituting each of the three groups. Effective Filtration Area (EFA) was measured for each of the cartridges after testing was completed. Analysis of tests results follow. Flow performance results were also normalized for EFA.

### Airflow

Airflow testing was conducted at vent conditions and at 30 psig. On average, at both conditions the cartridges in groups 2 and 3 lost 30% of their airflow performance compared to the control group. Table 1 show the airflow at vent conditions and Table 2 the airflow at 30 psig.

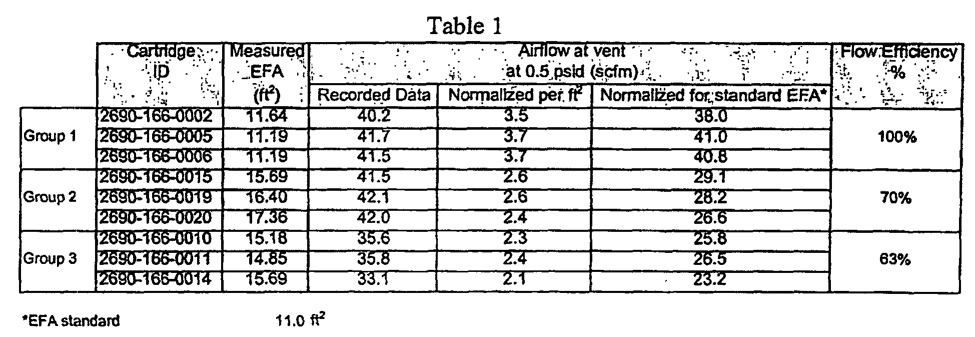

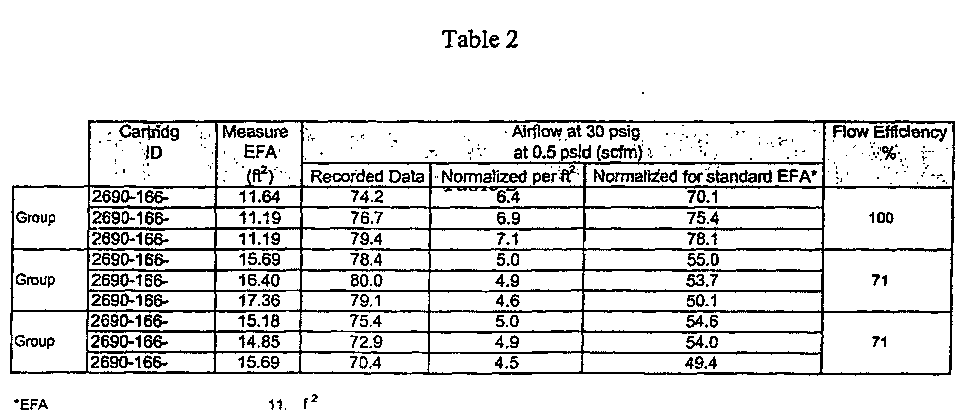

### Water Flow Rates

Water flow rate testing established that both groups 2 and 3 had an average decrease of 36% for water flow efficiency.

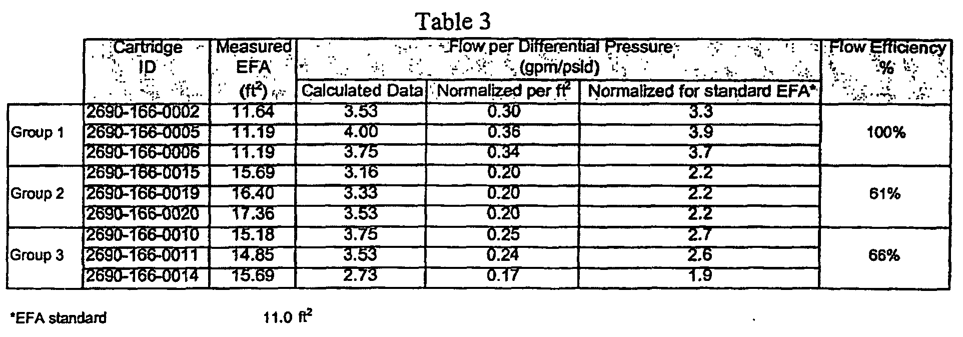

The addition of support layers to the filter design in accordance with the invention allows for an increase in the media area without resorting to different pleat designs, larger geometries or ever thinner supports, despite the fact that the additional support layers effectively add thickness. The relatively thin filtration media is capable of increased packing by pressing the pleats together more closely, but as in prior art systems, the increased area associated with tight packing does not result in increased flow because the support materials have been closely pinched together. However, when multiple downstream support layers are employed, as described in the present invention, enhanced filtration performance has been observed and namely an improved flow rate and improved flux (flow per area).

The disclosed filter elements may be utilized in filter cartridges to provide enhanced filtration performance, e.g., by way of increased media area and improved flow.

An exemplary filter cartridge according to the present disclosure includes a filter element having a longitudinal axis, an outer periphery and an inner periphery. The filter element typically includes a filtration media, an upstream pleat support positioned upstream from and in contact with the filtration media, and a multi-layer downstream pleat support positioned downstream from the filtration media. The multi-layer downstream support includes a first downstream support layer and a second downstream support layer. It has been found that while it is preferred that there be an upstream pleat support, its presence is not essential to the beneficial results realized in accordance with the invention.

The first downstream support layer is in contact with the filtration media and is interposed between the filtration media and the second downstream layer, the first downstream support layer being fabricated so as to minimize points of surface contact with the filtration media.

The second downstream support layer is in contact with the first downstream support layer and is fabricated so as to facilitate lateral fluid flow relative to the multi-layer downstream pleat support.

The filter cartridges according to the present invention also typically include a perforated cage surrounding the outer periphery of the filter element, a perforated core surrounded by the inner periphery of the filter element coaxially positioned within the cage, and end caps enclosing the ends of the perforated cage.

### DETAILED DESCRIPTION OF THE DRAWINGS

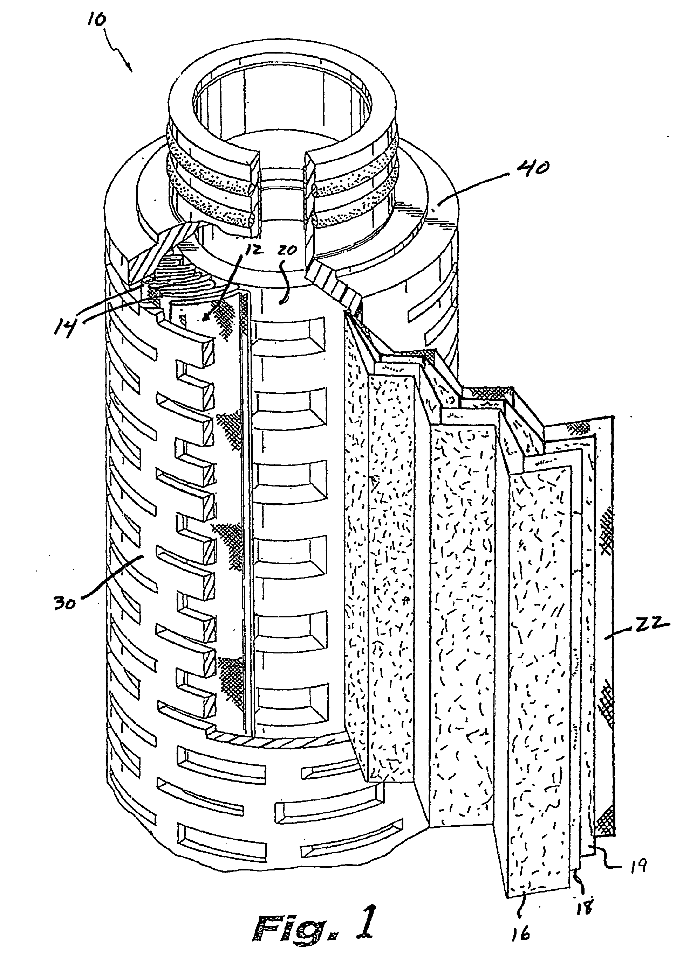

Referring now to the drawings wherein like reference numerals identify similar structural elements of the present disclosure, there is illustrated in Fig. 1 a pleated filter cartridge constructed according to the invention and designated generally by reference numeral 10.

Filter cartridge 10 includes an elongated pleated filter element 12 having a plurality of longitudinal pleats 14 surrounding a central perforated core 20 coaxially disposed within the filter element and a perforated outer cage 30 coaxially disposed on the filter element. The core 20 supports the inner periphery of the filter element 12 against forces in the radial direction and also helps to give the filter axial strength and rigidity against bending. The cage 30 retains the pleats of the filter element 10, preferably in a radial pleat configuration. It is possible to employ means other than cage 30 to retain the pleats as, for example, a polymeric netting or mesh material may be utilized to retain the pleats about the outer periphery of filter element 12. Usually a cartridge assembly 10 will be equipped with end caps at both ends. The end caps 40 can be either closed or open end caps and the materials of which they are formed and their shape are selected depending on the filtering conditions and the materials of the members to which they are to be joined.

When the filter element 12 is used under conditions where the fluid flows radially inwardly through the filter element, i.e., from the cage 30 to the core 20, the internal surfaces of the pleat legs form the downstream surface of the filter element 12, while the external surfaces of the pleat legs form the upstream surface of the filter element 12. Conversely, when the filter element 12 is used under conditions such that fluid flows radially outwardly through the element, i.e., from the core to the cage, the internal surfaces of the pleat legs define the upstream surface of the filter element 12 and the external surfaces of the pleat legs define the downstream surface of the filter element 12. More specifically, as used herein, upstream and downstream refer to the exterior and interior surfaces of the filter element 12 when the filter element is being subject to radially outward fluid flow.

Filtration element 12 includes an upstream pleat support 16, a filtration media 18, a multi-layer downstream support that includes a first downstream support layer 19 and a second downstream support layer 22. Selection of an upstream pleat support 16 is not critical to filtration performance and its selection generally depends upon a number of factors, namely, requirements associated with the upstream support's ability to maintain flow under dirt loading, the required chemical resistance of the upstream support, and/or conditions associated with potential damage to the filtration media caused by the upstream support.

The filtration media 18 may take a variety of pleated forms, the filtration media 18 may define radial pleats, W-pleats or spiral pleats.

There are no particular restrictions on the type of filter medium 18 that can be employed in the present filter element 12 and the filter medium can be selected in accordance with he fluid to be filtered and the desired filtering characteristics. The filter medium 18 can be used to filter fluids such as liquids, gases, or mixtures thereof, and may comprise a porous film or a fibrous sheet or mass, or any combination thereof, may have a uniform or graded pore structure and any appropriate effective pore size; may include single or multiple layers; and may be formed from any suitable material, such a natural material, synthetic polymer, glass or metal.

According to preferred embodiments of the present disclosure, the filter medium is comprised of one or more sheets of non-woven thermoplastic microfibers. The nonwoven thermoplastic microfibers may be meltblown, spunbond, spunlace, carded or hydroentangled, for example. In addition, the filter medium may be calendered, or compressed, to further modify its porosity. For lower temperature filtering applications (i.e., below 180° F.), the thermoplastic can comprise polypropylene, for example, while for higher temperature applications (i.e., above 180° F.) or chemical compatibility with other fluids, the thermoplastic can comprise polyaramide, nylon, polyester or melt-processible fluoropolymer, for example.

The filtration media 18 is typically a microporous filtration media having a pore size of about 0.1 microns to about 10 microns, and is generally fabricated from conventional filtration materials, such as expanded Teflon, nylon, polyether sulfone, polyvinylidene difluoride and the like.

The pore size of filtration media 18 is generally characterized by bubble point tests, which involve measuring the pressure to force either the first air bubble out of a fully wetted phase inversion membrane (the initial Bubble Point, or "IBP"), and the higher pressure which forces air out of the majority of pores all over the phase inversion membrane (foam-all-over-point or "FAOP"). The procedures for conducting initial bubble point and FAOP tests are discussed in U.S. Patent No. 4,645,602, the disclosure of which is incorporated herein by reference. The procedure for the initial bubble point test and the more common Mean Flow Pore tests are explained in detail, for example, in ASTM F316-70 and ANS/ASTM F316-70 (Reapproved 1976), which are incorporated herein by reference. The bubble point values for microporous phase inversion membranes are generally in the range of about five (5) to about one hundred (100) psig, depending on the pore size and the wetting fluid. An additional pore measurement technique is described in ASTM E1294 89, which describes a method for determining pore size by clearing fluid from the pores of the membrane and measuring the resulting flow. This method is used to measure mean flow pore and is similar to the method used to measure bubble point, and reports the initial bubble point as the maximum pore size.

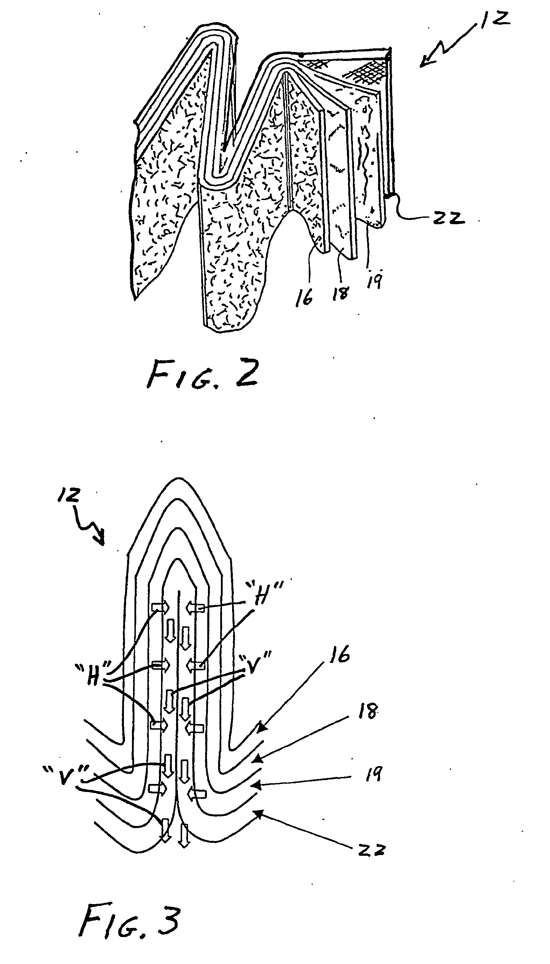

As shown in Figs. 1-3, the first downstream support layer 19 is interposed between filtration media 18 and second downstream support layer 22. In an exemplary embodiment of the present disclosure, the first downstream support layer 19 is fabricated using spunbond, spunlace, airlaid or wetlaid techniques, and is fabricated so as to minimize points of surface contact with filtration media 18, thereby enhancing fluid flow away from filtration media 18. More particularly, the first downstream support layer 19 is generally fabricated from a material that contacts the filtration media 18 in as few locations as possible so as to allow the fluid, whether it be liquid or gas, to egress from filtration media 18 and into the second downstream support layer 22.

The fluid flow through the filter elements according to the present disclosure is schematically illustrated in Fig. 3, wherein horizontal arrows "H" show fluid flow through the first downstream support layer 19, away from filtration media 18 and toward second downstream support layer 22. The vertical arrows "V" show lateral fluid flow that is facilitated by the physical properties of second downstream support layer 22. Lateral fluid flow associated with the second downstream support layer 22 feeds filtered fluid toward the egress point associated with exemplary filter element 12, e.g., toward core 20.

The first downstream support layers are preferably fabricated from materials such as polyamide, polypropylene or polyesters, e.g., poly(ethylene terephthalate) (PET), poly(butylene terephthalate (PBT), PTT or polyaramide. A preferred material for use in fabricating the first downstream support layer is BBA Nonwoven Typar 3091L, although other nonwoven materials that minimize points of contact with the filtration media are also suitable for use according to the present disclosure. Beneficial attributes for nonwoven materials that may be used in fabricating the first downstream support layer according to the present disclosure are lower denier (i.e., lower fiber diameter), low basis weight (provided adequate web strength is maintained), and low thickness. As noted above, however, a guiding principle in selecting an appropriate material for fabrication of the first downstream layer is to provide minimal contact points with the filtration media and high flow through the nonwoven layer, while still providing adequate strength.

The fibers forming the nonwoven material may be bonded together with thermal binders or chemical binders. Suitable materials for use in fabricating the first downstream support layer generally are characterized by high air permeability, low thickness, high strength, low fiber diameter and/or a relatively soft feel to prevent abrasion of the filtration media. In some applications, it may be desirable to impart chemical or oxidation resistance to the first downstream support layer, as will be apparent to persons skilled in the art based on the intended filtration application(s). In an exemplary embodiment of the present disclosure, the first downstream support layer is a nonwoven material that is laminated to the filtration media. Lamination may be effected according to conventional lamination techniques, as are well known in the art.

According to the present disclosure, the second downstream support layer is in contact with the first downstream support layer and is fabricated so as to facilitate lateral fluid flow. Thus, in a preferred embodiment of the present disclosure, the second: downstream support layer is fabricated from an extruded apertured film material, and preferably an apertured film material with rib(s) formed on one side. The rib(s) advantageously maintain a gap when the pleated filtration media is folded onto itself, thereby greatly improving lateral fluid flow. A preferred material for use in fabricating the second downstream support layer according to the present disclosure is Delstar Delnet RC-0707-24P.

Many different filtration devices will benefit from the superior performance attributes as disclosed herein. For example, the disclosed multi-layer downstream support layers may prove particularly beneficial to Teflon filtration media used in air applications and hydrophobic PVDF filtration media, which are also used in air applications. Teflon membranes, in particular, may be laminated to a nonwoven support as part of the manufacturing process.

It is further contemplated that the disclosed multi-layer downstream support may be advantageously incorporated into a non-cylindrical filtration device. For example, it is contemplated that a filtration device that includes a multi-layer downstream support, as disclosed herein, and having a geometry wherein the outer and inner peripheries are substantially parallel to each other, will exhibit enhanced filtration performance by increasing filtration media area and improving flow/throughput. Indeed, it is to be expected that by incorporating the disclosed multi-layer downstream support in a substantially planar filtration device configuration, fluid flow (both through the filtration device and laterally relative to the filtration device) will be advantageously maintained, despite close packing of the pleats therewithin.

Although the filter elements and filter cartridges of the present disclosure have been described with respect to preferred embodiments, those skilled in the art will readily appreciate that changes and modifications may be made thereto without departing from the scope hereof as defined by the appended claims.

## Claims

1. A filter element (12), comprising:
a filtration media (18);
an upstream filtration media support (16) positioned upstream from and in contact with said filtration media; and
a multi-layer downstream filtration media support (19,22) positioned downstream from said filtration media, said multi-layer downstream support including a first downstream support layer (19) and a second downstream support layer (22), wherein:
(a) said first downstream support layer (19) is in contact with said filtration media (18) and is interposed between said filtration media and said second downstream layer (22), said first downstream support layer is fabricated so as to minimize points of surface contact with said filtration media; and
(b) said second downstream support layer (22) is in contact with said first downstream support layer and is fabricated so as to facilitate lateral fluid flow relative to said multi-layer downstream support, wherein said second downstream support layer (22) comprises an extruded apertured film having ribs.

2. A filter element as recited in Claim 1, wherein the filtration media (18) is a pleated filtration media having a plurality of longitudinally extending pleats (17).

3. A filter element as recited in Claim 2, wherein the longitudinally extending pleats (14) of said pleated filtration media (18) are selected from the group consisting of radial pleats, w-pleats and spiral pleats.

4. A filter element as recited in Claim 1, wherein the filtration media (18) is a microporous filtration membrane having a pore size of from about 0.1 microns to about 10 microns.

5. A filter element as recited in Claim 1, wherein the filtration media (18) is fabricated from a material selected from the group consisting of Teflon, nylon, polyaramide, polyvinylidene difluoride, polyether sulfone and combinations thereof.

6. A filter element as recited in Claim 1, wherein the multi-layer downstream support (19,22) consists of said first downstream support layer and said second downstream support layer.

7. A filter element as recited in Claim 1, wherein said first downstream support layer (19) is fabricated from a nonwoven material.

8. A filter element as recited in Claim 7, wherein said nonwoven material is laminated to said filtration media (18).

9. A filter element as recited in Claim 7, wherein said nonwoven material is fabricated as a spunbond, spunlace, airlaid or wetlaid material.

10. A filter element as recited in Claim 7, wherein said nonwoven material is fabricated from polypropylene, polyester or polyamide.

11. A filter as recited in Claim 1, wherein said extruded apertured film (22) has ribs on one side.

12. A filter cartridge comprising:
a filter element according to any one of claims 1 to 12, the filter element (12) having a longitudinal axis, an outer periphery and an inner periphery; and the filter cartridge (10) further including :
a perforated cage (30) surrounding the outer periphery of the filter element;
a perforated core (20) surrounded by the inner periphery of the filter element; and
end caps (40) enclosing both ends of the perforated cage.

13. A filter cartridge as recited in Claim 12 wherein said perforated core (20) is a cylindrical core and is coaxially positioned within the filter element which is a cylindrical filter element and the cage (30) is likewise cylindrical and is coaxially positioned about the cylindrical filter element.

## Revendications

1. Élément de filtre (12) comprenant :
un milieu de filtration (18) ;
un support de milieu de filtration amont (16) qui est disposé en amont par rapport à, et qui vient en contact avec ledit milieu de filtration ; et
un support de milieu de filtration aval à couches multiples (19, 22) qui est disposé en aval par rapport au dit milieu de filtration, ledit support de milieu de filtration aval à couches multiples comprenant une première couche de support aval (19) et une deuxième couche de support aval (22), dans lequel :
(a) ladite première couche de support aval (19) est en contact avec ledit milieu de filtration (18) et est intercalée entre ledit milieu de filtration et ladite deuxième couche de support aval (22), ladite première couche de support aval est fabriquée de manière à minimiser des points de contact de surface avec ledit milieu de filtration ; et
(b) ladite deuxième couche de support aval (22) est en contact avec ladite première couche support aval et est fabriquée de manière à faciliter un écoulement de fluide latéral par rapport au dit support de milieu de filtration aval à couches multiples, dans lequel ladite deuxième couche de support aval (22) comprend un film à ouvertures extrudé présentant des nervures.

2. Élément de filtre selon la revendication 1, dans lequel le milieu de filtration (18) est un milieu de filtration plissé présentant une pluralité de plis (17) qui s'étendent longitudinalement.

3. Élément de filtre selon la revendication 2, dans lequel les plis (17) s'étendant longitudinalement dudit milieu de filtration (18) plissé sont sélectionnés dans le groupe composé de plis radiaux, de plis en W et de plis en spirale.

4. Élément de filtre selon la revendication 1, dans lequel le milieu de filtration (18) est une membrane de filtration microporeuse dont la taille de pores va de 0,1 microns environ à 10 microns environ.

5. Élément de filtre selon la revendication 1, dans lequel le milieu de filtration (18) est fabriqué à partir d'un matériau sélectionné dans le groupe composé de Téflon, de nylon, de polyaramide, de bifluorure de vinylidène, de polyéther sulfone et de combinaisons de ceux-ci.

6. Élément de filtre selon la revendication 1, dans lequel le support de milieu de filtration aval à couches multiples (19, 22) comprend ladite première couche de support aval et ladite deuxième couche de support aval.

7. Élément de filtre selon la revendication 1, dans lequel ladite première couche de support aval (19) est fabriquée en un matériau non tissé.

8. Élément de filtre selon la revendication 7, dans lequel ledit matériau non tissé est appliqué par pression sur ledit milieu de filtration (18).

9. Élément de filtre selon la revendication 7, dans lequel ledit matériau non tissé est fabriqué sous la forme d'un matériau non tissé par filage direct, d'un matériau non tissé lacé par filage, d'un matériau non tissé air-laid ou d'un matériau non tissé par voie humide.

10. Élément de filtre selon la revendication 7, dans lequel ledit matériau non tissé est fabriqué à partir de polypropylène, de polyester ou de polyamide.

11. Élément de filtre selon la revendication 1, dans lequel ledit film (22) à ouvertures extrudé présente des nervures sur un seul côté.

12. Cartouche de filtre comprenant :
un élément de filtre selon l'une quelconque des revendications 1 à 11, l'élément de filtre (12) comprenant un axe longitudinal, une périphérie extérieure et une périphérie intérieure ; et
la cartouche de filtre (10) comprenant en outre :
une cage (30) perforée qui entoure la périphérie extérieure de l'élément de filtre ;
un noyau (20) perforé qui est entouré par la périphérie intérieure de l'élément de filtre ; et
des capuchons d'extrémité (40) qui renferment les deux extrémités de la cage perforée.

13. Cartouche de filtre selon la revendication 12, dans laquelle ledit noyau (20) perforé est un noyau cylindrique et est disposé coaxialement à l'intérieur de l'élément de filtre qui est un élément de filtre cylindrique, et la cage (30) est elle aussi cylindrique et est disposée coaxialement autour de l'élément de filtre cylindrique.

## Patentansprüche

1. Filterelement (12), umfassend:
ein Filtermedium (18);
einen stromaufwärts liegenden Filtermedium-Träger (16), der stromaufwärts und in Kontakt mit dem Filtermedium angeordnet ist; und
einen mehrschichtigen, stromabwärts liegenden Filtermedium-Träger (19, 22), der stromabwärts des Filtermediums angeordnet ist, wobei der mehrschichtige, stromabwärts liegende Träger eine erste, stromabwärts liegende Trägerschicht (19) und eine zweite, stromabwärts liegende Trägerschicht (22) aufweist, **dadurch gekennzeichnet, dass**:
a) die erste, stromabwärts liegende Trägerschicht (19) mit dem Filtermedium (18) in Kontakt steht und zwischen dem Filtermedium und der zweiten, stromabwärts liegenden Schicht (22) angeordnet ist, wobei die erste, stromabwärts liegende Trägerschicht derart hergestellt ist, dass die Anzahl der Oberflächen-Berührungspunkte mit dem Filtermedium minimiert wird; und
b) die zweite, stromabwärts liegende Trägerschicht (22) mit der ersten, stromabwärts liegenden Trägerschicht in Kontakt steht und derart hergestellt ist, dass eine laterale Fluidströmung relativ zum mehrschichtigen, stromabwärts liegenden Träger erleichtert wird, wobei die zweite, stromabwärts liegende Trägerschicht (22) einen extrudierten, mit Öffnungen versehenen Film umfasst, der Rippen aufweist.

2. Filterelement nach Anspruch 1, **dadurch gekennzeichnet, dass** das Filtermedium (18) ein gefaltetes Fiftermedium ist, das mehrere Falten (14) aufweist, die sich in einer Längsrichtung erstrecken.

3. Filterelement nach Anspruch 2, **dadurch gekennzeichnet, dass** die sich longitudinal erstreckenden Falten (14) des gefalteten Filtermediums (18) aus der Gruppe bestehend aus radialen Falten, W-Falten und spiralförmigen Falten gewählt sind.

4. Filterelement nach Anspruch 1, **dadurch gekennzeichnet, dass** das Filtermedium (18) eine mikroporöse Filtermembran ist, die eine Porengröße von etwa 0,1 µm bis etwa 10 µm aufweist.

5. Filterelement nach Anspruch 1, **dadurch gekennzeichnet, dass** das Filtermedium (18) aus einem Material hergestellt ist, das aus der Gruppe bestehend aus Teflon, Nylon, Polyaramid, Polyvinyliden-Difluorid, Polyether-Sulfon und deren Kombinationen gewählt ist.

6. Filterelement nach Anspruch 1, **dadurch gekennzeichnet, dass** der mehrschichtige, stromabwärts liegende Träger (19, 22) aus einer ersten, stromabwärts liegenden Trägerschicht und einer zweiten, stromabwärts liegenden Trägerschicht besteht.

7. Filterelement nach Anspruch 1, **dadurch gekennzeichnet, dass** die erste, stromabwärts liegende Trägerschicht (19) aus einem Vliesstoff hergestellt ist.

8. Filterelement nach Anspruch 7, **dadurch gekennzeichnet, dass** der Vliesstoff auf das Filtermedium (18) laminiert ist.

9. Filterelement nach Anspruch 7, **dadurch gekennzeichnet, dass** der Vliesstoff aus einem Spun-Bond-, Spun-Lace-, Air-Laid- oder Wet-Laid-Material hergestellt ist.

10. Filterelement nach Anspruch 7, **dadurch gekennzeichnet, dass** das Fließmaterial aus Polypropylen, Polyester oder Polyamid hergestellt ist.

11. Filter nach Anspruch 1, **dadurch gekennzeichnet, dass** der extrudierte, mit Öffnungen versehene Film (22) auf einer Seite Rippen aufweist.

12. Filterkartusche, umfassend ein Filterelement gemäß einem der Ansprüche 1 bis 11, wobei das Filterelement (12) eine Längsachse, einen Außenumfang und einen Innenumfang aufweist; und die Filterkartusche (10) ferner
einen perforierten Käfig (30), der den Außenumfang des Filterelements umgibt; eine perforierte Hülse (20), die vom Innenumfang des Filterelements umgeben wird; und
Endkappen (40) umfasst, die beide Enden des perforierten Käfigs abschließen.

13. Filterkartusche nach Anspruch (12), **dadurch gekennzeichnet, dass** die perforierte Hülse (20) eine zylindrische Hülse ist, die koaxial innerhalb des Filterelements angeordnet ist, das ein zylindrisches Filterelement ist, wobei der Käfig (30) ebenfalls zylindrisch ist und koaxial um das zylindrische Filterelement herum angeordnet ist.
